# EUROPEAN PATENT APPLICATION

(11) **EP 1 600 701 A2**
(43) Date of publication of application: **30.11.2005**
(21) Application number: 05011300.0
(22) Date of filing: 25.05.2005
(51) Int. Cl.: F24F 5/00, F25B 27/00

(54) **Air-conditioning and electrical energy generating system**

(30) Priority: 27.05.2004 JP 2004157673
(71) Applicant: AISIN SEIKI KABUSHIKI KAISHA, Kariya-shi, Aichi-ken 448-8650 (JP)
(72) Inventor: Yabutani, Motohiko IPD Aisin Seiki K.K., Kariya-shi Aichi-ken 448-8650 (JP)
(74) Representative: Pautex Schneider, Nicole Véronique

(57) **Abstract**

An air-conditioning and electric energy generating system includes an engine (1) producing a driving force; an air conditioner having at least one of cooling and heating abilities; an air conditioner-driving device (2) for driving the air conditioner (8); an electrical generator (3) for generating electrical energy; and a driving force distributing device (10) provided between the air conditioner-driving device (2) and the electric generator (3) and for distributing the driving force from the engine (1) to the air conditioner-driving device (2) and the electrical generator at variable first and second ratios (R1 and R2).

## Description

### FIELD OF THE INVENTION

This invention generally relates to an air-conditioning and electric energy generating system according to which both an air conditioner-driving device, such as a compressor, which drives an air conditioner for ventilation and air-conditioning, and an electric generator which generates electric energy.

### BACKGROUND

JP2002-257431A discloses a cogeneration system, which incorporates, therein, an engine, a compressor that drives an air conditioner for ventilation, an electric generator that generates electrical energy, and a casing that houses these components integrally therein.

JP2000-337231A discloses a system which incorporates, therein, a compressor that drives an air conditioner for air-conditioning, a electrical generator that generates electrical energy and operates as a motor, an engine linked to the electrical generator, a rotor position-detecting sensor for detecting a position of a rotor of the electrical generator, a brushless motor circuit which electrically excites, on the basis of a signal of the rotor position-detecting sensor, coils of the electrical generator in such a manner of producing a rotational magnetic field at the coils, a direct-current power source that supplies electric voltage to the brushless motor circuit, and an inverter circuit that converts energy output from the electrical generator to alternate-current output. In this system, the electrical generator is provided as a single unit and can function, not only as an electric generator, but also as a starter motor for starting up activation of an engine. Moreover, this electrical generator is controlled to generate energy output in response to variations in load applied to the compressor as an air conditioner-driving device, thereby enabling to confine a degree of load imposed on an engine to a certain definite value.

In the cogeneration system disclosed in JP2002-257431A, a driving force of an engine is distributed to both the compressor for driving the air conditioner and the electric generator. Percentages, at which the driving force of the engine is distributed to both the compressor and the electric generator, are basically fixed. Therefore, there may be a certain ceiling to further improve both air-conditioning performance by the air conditioner and electrical energy generating performance by the electric generator.

In the system disclosed in JP2000-337231A, the electrical generator is provided as a single unit and can function, not only as an electric generator, but also as a starter motor for starting up activation of an engine. Therefore, the compressor and the electric generator are not provided separately from each other. Further, the compressor and the electric generator are not operated simultaneously by the engine. That is, both ventilation (air-conditioning) and generation of electric energy are not implemented simultaneously.

The present invention has been made in view of the above circumstances, and provides an air-conditioning and electric energy generating system, in which both an air-conditioner driving device such as a compressor and a electric generator are driven independently, and in which air-conditioning performance by an air-conditioner and electric energy generating performance by an electric generator can be effectively enhanced.

### SUMMARY OF THE INVENTION

According to an aspect of the present invention, an air-conditioning and electric energy generating system includes an engine producing a driving force, an air conditioner having at least one of cooling and heating abilities; an air conditioner-driving device for driving the air conditioner, an electrical generator for generating electrical energy, and a driving force distributing means provided between the air conditioner-driving device and the electrical generator and for distributing the driving force from the engine to the air conditioner-driving device and the electric generator at variable first and second ratios, respectively.

It is preferable that the air-conditioning and electric energy generating system further includes a driving force distribution ratio controlling means by which the second ratio is controlled to a relatively low extent when the first ratio is relatively high, and the second ratio is controlled to a relatively high extent when the first ratio is relatively low.

It is further preferable that the driving force distribution ratio controlling means controls the first ratio and the second ratio depending on at least one of thermal energy information on thermal energy accumulated in a water storage tank, air-conditioning load information required to the air conditioner, and required electric energy amount information on a requisite amount of electric power to be generated.

### BRIEF DESCRIPTION OF THE DRAWINGS

The foregoing and additional features and characteristics of the present invention will become more apparent from the following detailed description considered with reference to the accompanying drawings, wherein:

Fig. 1 is a block view schematically illustrating an air-conditioning and electric energy generating system according to an embodiment of the present invention;

Fig. 2 is a diagram for explaining variations in an engine load factor and in engine driving force distribution ratios when cooling is demanded;

Fig. 3 is a diagram for explaining variations in the engine load factor and in the engine driving force distribution ratios when heating is demanded;

Fig. 4 is a diagram for explaining variations in the engine load factor and in a requisite amount of electric power to be generated when neither cooling nor heating is demanded;

Fig. 5 is another diagram for explaining the variations in the engine load factor and in a requisite amount of electric power to be generated when neither cooling nor heating is demanded;

Fig. 6 is a block view schematically illustrating a linkage among an engine, a compressor and an electric generator;

Fig. 7 is a block view schematically illustrating another linkage among the engine, the compressor and the electric generator;

Fig. 8 is a view illustrating a relevant portion of a driving force distributing means according to the embodiment of the present invention; and

Fig. 9 is another view illustrating a relevant portion of the driving force distributing means according to the embodiment of the present invention.

### DETAILED DESCRIPTION

An embodiment of the present invention will be described hereinbelow in detail with reference to the accompanying drawings.

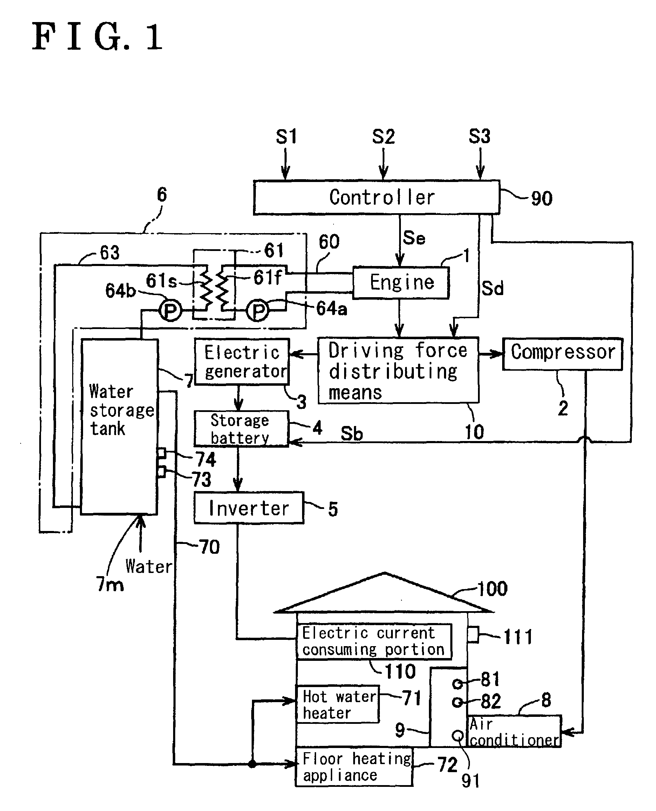

As is illustrated in Fig. 1, an air-conditioning and electric energy generating system according to the embodiment of the present invention incorporates, therein, an engine 1, for example a gas engine which consumes combustible gas as a fuel, a compressor 2, which serves as an air conditioner-driving device for driving an air conditioner 8 (operated for at least one of cooling and heating) furnished at a building 100 (e.g., a residential building, a building, and a movable body), inter alia, for the purpose of ventilation or air-conditioning, and an electrical generator 3 that generates electrical energy. According to the embodiment of the present invention, it is preferable that the engine 1 is a driving source that is shared by both the compressor 2 and the electrical generator 3, and it is the only source of each of them. The engine 1 is activated by consuming combustible liquid or gas as fuel, and can be represented by a gasoline engine, a diesel engine, a reciprocal engine, and a rotary engine, as non-limiting examples.

This air-conditioning and electric energy generating system further incorporates, therein, a storage battery 4 (including a capacitor), which stores an excessive amount of electrical energy generated by the electrical generator 3, an inverter 5, which converts a current flow of direct current into a current flow of alternate current, and then supplies the alternate current to an electric power consuming unit 110 of the building 100, an engine waste heat recovery unit 6 recovering waste heat of the engine 1 as hot water or steam through a thermal exchange therein, a water storage tank 7 connected to the engine waste heart recovery unit 6, the air conditioner 8, which is controlled, on the basis of a refrigerant compressed by the compressor, to heat and cool an inside of the building 100, an inside of a room of the building 100, and an operating panel 9 on which a user manually sets conditions for operating this air-conditioning and electric energy generating system. The air conditioner 8 implements either cooling or heating in response to operation of a switch 91. The engine waste heat recovery unit 6 is configured with: a coolant passage 60 in which an engine coolant for refrigerating the engine 1 flows; a heat exchanger 61 communicating with the coolant passage 60; a circulation passage 63 communicating with the water storage tank 7 for storing, therein, water heated up through a thermal exchange, a water feeding source 64a (e.g., a pump) provided at the coolant passage 60; and a water feeding source 64b (e.g., a pump) provided at the circulation passage 63. An engine coolant can be circulated through the coolant passage 60 by the water feeding source 64a, therefore. The engine coolant can hence be heated up by recovering the waste heat of the engine 1 and can flow through a first passage 61 f of the heat exchanger 61. In the heat exchanger 61, thermal exchange can be efficiently implemented especially between water flowing in a second passage 61s and the engine coolant flowing in the first passage 61f, wherein the water in the second passage 61s is heated up by the engine coolant in the first passage 61f, and is stored as hot water in the water storage tank 7 after flowing the circulation passage 63. The hot water accumulated in the water storage tank 7 is supplied to both a hot water heater 71 (e.g., hot water heaters for a bath, a shower and a kitchen) furnished at the building 100 and a floor heating appliance 72 for heating a floor of the building 100. At an event that deficiency in the amount of hot water being accumulated in the water storage tank 7 is detected, supplemental water is fed into the water storage tank 7 via a water supply port 7m.

As is further illustrated in Fig. 1, a driving force distributing means 10 is installed between the compressor and the electrical generator 3. By this driving force distributing means 10, the engine 1, the compressor 2 and the electrical generator 3 are interconnected. Moreover, by this driving force distributing means 10, driving force emanated from the engine 1 can be transmitted to both the compressor 2 and the electrical generator 3 for their individual operations. In this case, the driving force distributing means 10 can alter by gradual steps or continuously a first ratio R1, at which the driving force of the engine 1 is distributed to the compressor 2, and a second ratio R2, at which the driving force of the engine 1 is distributed to the electrical generator 3. For example, according to the embodiment of the present invention, the first ratio R1 is designed by gradual steps or continuously to alter from 0 to 100% inclusive. Likewise, the second ratio R1 is designed to alter by gradual steps or continuously from 0 to 100% inclusive.

This air-conditioning and electric energy generating system further incorporates, therein, a controller 90 for controlling this system. The controller 90 can act as a driving force distribution controlling means for controlling driving of the driving force distributing means 10, an engine controlling means for controlling activation of the engine 1, and an electrical energy controlling means for controlling an excessive amount of electrical energy generated by the electrical generator 3 either to be accumulated in the storage battery (4) or to be transmitted to commercial electric wires.

The controller 90 is inputted with thermal energy information S 1 which represents thermal energy already accumulated in the water storage tank 7, air-conditioning load information S2 on a degree of air-conditioning load required to the air conditioner 8 (at least one of cooling and heating), and required electric energy amount information S3 which represents a requisite amount of electric power to be generated (electric power consumption) that is currently being consumed by the electric power consuming unit 110 of a residential building, a building and so on. The controller 90 outputs, on the basis of the thermal energy information S1, the air-conditioning load information S2 and the required electric energy amount information S3, a signal Se controlling activation of the engine 1 and a signal Sd controlling the driving force distributing means 10. As described above, the controller 90 preferably controls, on the basis of at least one of the information S1, S2 and S3, the driving force-distributing means 10 to alter respective degrees of the first ratio R1 and the second ratio R2.

As the thermal energy information S1 on the thermal energy stored in the water storage tank 7, at least one of a temperature of hot water stored in the water storage tank 7 and the amount of hot water therein is referred to. A temperature of hot water is obtained by a hot water temperature sensor 73, which is equipped to the water storage tank 7 and detects a temperature of the hot water accumulated in the water storage tank 7. The amount of hot water accumulated in the water storage tank 7 is obtained by a hot water amount sensor 74, which is also equipped to the water storage tank 7 and detects the amount of hot water already stored in the water storage tank 7. As the air-conditioning load information S2, which is employed so as to set a degree of load applied to the air conditioner 8, at least one of an ambient temperature of the building 100 and a humidity thereof is referred to. An ambient temperature of the building 100 is obtained on the basis of a thermal requirement signal determined by a temperature switch 81 furnished in the operating panel 9, while a humidity is obtained on the basis of a humidity requirement signal determined by a humidity switch 82 furnished therein. The required electric energy amount information S3 is obtained by a wattmeter 111 furnished at the building 100.

When cooling or heating is highly required, such as when an outside air temperature is relatively high or low, the air conditioner 8 on occasions is subjected to air-conditioning load that is greater than that required when an outside air temperature falls within an appropriate temperature range. The controller 90 in such circumstances sets a degree of driving force from the engine 1. The controller 90 further performs a second distribution control by which the first ratio R1, at which the driving force of the engine 1 is distributed to the compressor 2, is relatively high, and the second ratio R2, at which the driving force of the engine 1 is distributed to the electrical generator 3, is relatively low. Therefore, by reducing the percentage, at which electrical energy is generated, together with increasing the percentage, at which air-conditioning is performed, as described above, cooling or heating can be appropriately achieved.

On the other hand, when cooling or heating is less required, such as when an outside air temperature is appropriate, the air conditioner 8 is subjected to air-conditioning load that is relatively small, or is not subjected to such load. In such circumstances, the controller 90 performs a first distribution control by which the first ratio R1 is relatively low, or is controlled to zero percentage, thereby lowering a rotational speed of the compressor 2, or controlling the compressor 2 not to rotate. At this point, the controller 90 raises the second ratio R2, at which the driving force of the engine 1 is distributed to the electrical generator 3, whereby increasing an amount of electrical energy generated by the electrical generator 3. However, there may be a danger of the electrical generator 3 of generating an amount of electrical energy, which is greater than an amount of electric power consumed by the electric power-consuming unit 110. If the electrical generator 3 generates such a great amount of electrical energy, an excessive amount of electric energy can be stored in the storage battery 4.

When the first ratio R1 is relatively high or low as described above, a value of the first ratio R1 is expressed as a relative value. When the first ratio R1 is relatively high, it means that the first ratio R1 is relatively higher than that which is low. On the other hand, when the first ratio R1 is relatively low, it means that the first ratio R1 is relatively lower than that which is high. In this case, in order to clearly specify a relativity of an extent of the first ratio R1, the first ratio R1 can be expressed on the basis of whether the first ratio R1 is higher or lower than a threshold value.

As described above, according to the embodiment of the present invention, when the first ratio R1, at which the driving force of the engine 1 is distributed to the compressor 2, is relatively raised, the second ratio R2, at which the driving force of the engine 1 is distributed to the electrical generator 3, is relatively lowered. On the other hand, when the first ratio R1, at which the driving force of the engine 1 is distributed to the compressor 2, is relatively lowered, the second ratio R2, at which the driving force of the engine 1 is distributed to the electrical generator 3, is relatively raised. Accordingly, a total ratio (=R1+R2) of the first and second ratios R1 and R2 can fall within a definite ratio range, wherein it is possible to effectively confine the driving force of the engine 1, and furthermore an engine load factor, to a predetermined value or more, and to within a definite range. In such a case, improvements can be achieved in restraint of vibrations of the engine 1 and in durability thereof. An engine load factor herein refers to a percentage of a load currently applied to an engine on an assumption that a rated load of an engine is 100%. When the engine load factor is 90%, the engine is being applied with load that is 90% relative to the rated load of an engine. Moreover, because the engine load factor can be confined to within the definite ratio, it is possible to keep a fuel efficiency of the engine 1 at an appropriate level, thereby enabling to reduce a cost for fuel for activating the engine 1. Still moreover, in order to improve a fuel efficiency of the engine 1, it is preferable that the engine load factor is confined to the predetermined ratio or more, and to within the definite ratio range. In general, frequent variations in the engine load factor, and engine activation with the engine load factor confined to a low ratio on occasions deteriorate the fuel efficiency of the engine 1. Therefore, at least these two factors are deemed to be not favorable in terms of fuel efficiency of the engine 1. In other words, variations in the engine load factor, which occur less often, is more preferable, inter alia, for the purpose of enhancing the fuel efficiency of the engine 1.

In general, when the engine 1 is activated in a condition where the engine load factor is being maintained at a degree which is relatively high, a more desirable fuel efficiency of the engine 1 can be attained rather than that which is obtained when the engine 1 is activated in a condition where the engine load factor is being maintained at a degree which is relatively low. On the assumption that a rated output of the engine 1 is 100%, when the engine 1 is activated at the engine load factor falling within a range of approximately 70-120% (in which fuel-efficiency is good) rather than a range of approximately 30-50% which is relatively low, it has been considered to be desirable in order to reduce fuel consumption to an economic level while reducing a degree of noise of the engine 1 and assuring durability thereof. If the engine load factor is raised excessively, it is not preferable in terms of reducing a degree of noise of the engine 1 and assuring durability thereof.

Table 1 shows one of examples concerning about distribution of the driving force of the engine 1.

**Table 1**

| Primary control (Air-conditioning or Electric energy generation) | | | | | | | | | |
|---|---|---|---|---|---|---|---|---|---|
| | Air-conditioning ··· Electric energy generation | | | | | | | | |
| R1 (%) | 100 | 90 | 80 | 70 | 60 | 30 | 20 | 10 | 0 |
| R2 (%) | 0 | 10 | 20 | 30 | 40 | 70 | 80 | 90 | 100 |
| Total (%) | 100 | 100 | 100 | 100 | 100 | 100 | 100 | 100 | 100 |

On the assumption that the total percentage of the first and second ratios R1 and R2 is relatively determined to be 100%, when air-conditioning is highly demanded than electric energy generation, the total percentage is primarily dominated by the first ratio R1, which is controlled to a high degree, rather than the second ratio R2, which is controlled to a low degree. On the other hand, when electrical energy generation is highly demanded than air-conditioning, the total percentage is primarily dominated by the second ratio R2, which is controlled to a high degree, rather than the first ratio, which is controlled to a low degree.

As is summarized in Table 2, the total percentage of the first and second ratios R1 and R2 can be relatively determined to be 70%.

**Table 2**

| | Primary control (Air-conditioning or Electric energy generation) | | | | | | | | |
|---|---|---|---|---|---|---|---|---|---|
| | Air-conditioning ··· Electric energy generation | | | | | | | | |
| R1 (%) | 70 | 60 | 50 | 45 | 40 | 30 | 20 | 10 | 0 |
| R2 (%) | 0 | 10 | 20 | 25 | 30 | 40 | 50 | 60 | 70 |
| Total (%) | 70 | 70 | 70 | 70 | 70 | 70 | 70 | 70 | 70 |

In the same as described above, when air-conditioning is highly demanded than electric energy generation, the total percentage is primarily dominated by the first ratio R1, which is controlled to a high degree, rather than the second ratio R2, which is controlled to a low degree. On the other hand, when electrical energy generation is highly demanded than air-conditioning, the total percentage is primarily dominated by the second ratio R2, which is controlled to a high degree, rather than the first ratio, which is controlled to a low degree.

As is summarized in Table 3, the total percentage of the first and second ratios R1 and R2 can be relatively determined to be 120%.

**Table 3**

| | Primary control (Air-conditioning or Electric energy generation) | | | | | | | | |
|---|---|---|---|---|---|---|---|---|---|
| | Air-conditioning ··· Electric energy generation | | | | | | | | |
| R1 (%) | 120 | 100 | 80 | 70 | 60 | 50 | 40 | 20 | 0 |
| R2 (%) | 0 | 20 | 40 | 50 | 60 | 70 | 80 | 100 | 120 |
| Total (%) | 120 | 120 | 120 | 120 | 120 | 120 | 120 | 120 | 120 |

In the same as described above, when air-conditioning is highly demanded than electric energy generation, the total percentage is primarily dominated by the first ratio R1, which is controlled to a high degree, rather than the second ratio R2, which is controlled to a low degree. On the other hand, when electrical energy generation is highly demanded than air-conditioning, the total percentage is primarily dominated by the second ratio R2, which is controlled to a high degree, rather than the first ratio, which is controlled to a low degree.

The ratios summarized above in Table 1, Table 2 and Table 3 are some of examples of distribution ratios of the driving force of the engine 1, and the distribution ratios are not limited only to the above. Moreover, the total percentage of the first and second ratios R1 and R2 is not limited to a definite value. As far as the total percentage thereof is a definite value, or falls within a definite range, variations in an engine load factor can be effectively restrained, and fuel consumption can be reduced to the maximum possible extent.

In the light of the foregoing, a requisite amount of electric power to be generated (electric power consumption) that is currently being consumed at the building 100 is indicated with a reference "D". When the engine load factor, which substantially corresponds to a requisite amount of electric power to be generated D, is inferior to a value within the range in which fuel-efficiency is good, the controller 90 (i.e., the engine controlling means) controls activation of the engine 1 at an engine load factor which exceeds the engine load factor corresponding to the requisite amount of electric power to be generated D, i.e., at a high engine load factor confined to within the range in which engine-efficiency is good. That is, when the engine load factor corresponding to the requisite amount of electric power to be generated D is inferior to a value within the range in which fuel-efficiency is good, the engine 1 is applied with an engine load factor of which degree is increased. Therefore, it is possible to reduce costs that are needed for fuel of the engine 1, for electrical energy generation, and for air-conditioning. However, in such circumstances, there may be a danger of electrical energy of being generated beyond the requisite amount of electric power to be generated D. The controller 90 (i.e., the electrical energy controlling means) hence controls the storage battery 4 so as to accumulate an excessive amount of electric energy from among an overall amount of electric energy generated by the electrical generator 3. In this case, it is possible to reduce a cost for electrical energy generation while reducing fuel consumption to an economic level. On the other hand, when the engine load factor corresponding to the requisite amount of electric power to be generated D is confined to within the range in which fuel-efficiency is good, the controller 90 activates the engine 1 in such a manner that the engine load factor is confined to within the range in which fuel-efficiency is good. As far as the storage battery 4 can accumulate electrical energy therein, it can include a capacitor. Alternatively, an excessive amount of electric energy from among an overall amount of electric energy generated by the electrical generator 3 can be sent to commercial electric wires.

Next, explained below is controls, for example, of the engine load factors, the first ratio R1, and the second ratio R2 at each time of cooling and heating, and at a time when neither cooling nor heating is performed.

### (1) At the time of Cooling

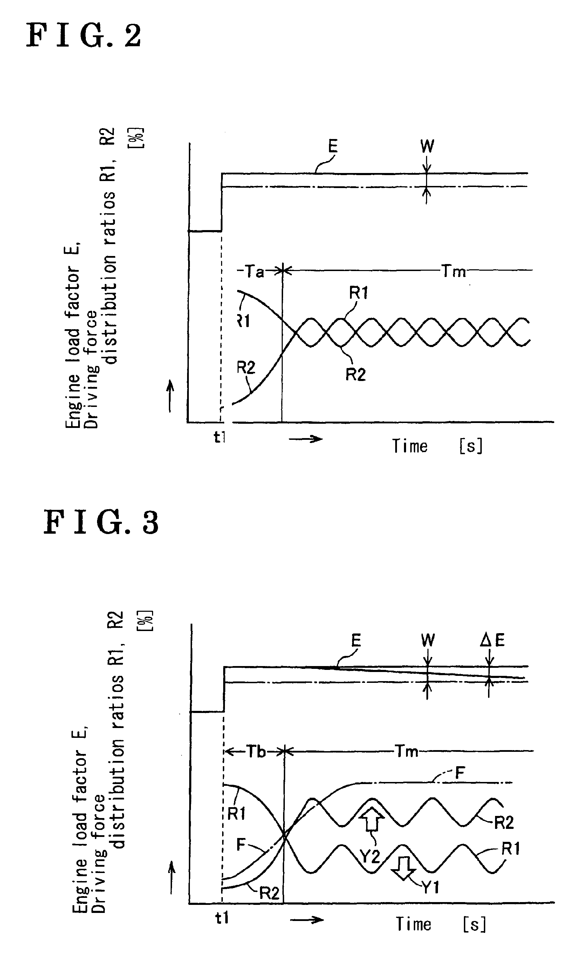

As described above, on the basis of at least one of thermal energy information S 1 of the water storage tank 7, air-conditioning load information S2 required to the air-conditioner 8, and required electric energy amount information S3 required to the electrical generator 3, the controller 90 determines the first ratio R1, at which the driving force of the engine 1 is distributed to the compressor 2, and the second ratio R2, at which the driving force of the engine 1 is distributed to the motor-generator 3. A characteristic line E illustrated in Fig. 2 denotes a load factor of the engine 1 over a period of time. As is obvious from Fig. 2, the controller 90 starts activation of the engine 1 at a time t1, and basically controls the engine load factor at a definite value as is illustrated by the characteristic line E. More specifically, even if the engine load factor alters due to variations in the air-conditioning load information S2 and the required electric energy amount information S3, the controller 90 controls activation of the engine 1 in such a manner that the engine load factor can be confined to within a definite range W. This definite range W substantially corresponds to the range in which fuel-efficiency is good. As described above, according to the embodiment of the present invention, because the controller 90 controls activation of the engine 1 in such a manner that the engine load factor can be confined to within the definite range W, it is possible to effectively reduce fuel consumption to the maximum possible extent. Moreover, it is possible to effectively reduce costs for fuel that is consumed for activating the engine 1, for electrical generation, and for air-conditioning.

When air-conditioning is highly required, such as when an outside temperature is high, the air conditioner 8 is addressed, on the basis of the air-conditioning load information S2, to be applied with cooling load (air-conditioning load) relatively greater than the one which is needed when an outside temperature falls within an appropriate temperature range. Further, because the outside temperature is high, hot water consumption is rather less. Therefore, thermal energy to be stored in the water storage tank 7 in this case is less required than that needed when an outside temperature is low.

During an early period of time Ta immediately after start-up of cooling at a time t1, in order cool a space at a high speed, the controller 90 relatively controls the first ratio R1, at which the driving force of the engine 1 is distributed to the compressor 2, to be a high value, thereby enhancing cooling performance of the air-conditioning 8. In this case, the second ratio R2, at which the driving force of the engine 1 is distributed to the electrical generator 3, is relatively controlled to be a low value, thereby curbing an amount of electrical energy generated by the electrical generator 3. Therefore, when air-conditioning is highly required, control performed by the controller 90 focuses on cooling rather than electric energy generation, in such a manner that cooling can be effectively performed.

In a matter of time after the early period of time Ta, cooling is gradually less required while cooling in the space is being progressed. In such circumstances, the controller 90 relatively controls the first ratio R1 to a ratio level being lower than that during the early period of time Ta, wherein cooling performance of the air-conditioner 8 can be reduced. In a matter of another time, cooling is again highly required in response to increase in a room temperature. The controller 90 then relatively raises the first ratio R1, wherein cooling performance of the air-conditioner 8 can be increased.

As described above, according to the embodiment of the present invention, excluding the early period of time Ta immediately after start-up of cooling the space at a time t1, during a stationary period of time Tm (Fig. 2), the first ratio R1 is thus controlled by the controller 90 to go up and down creating a sine curve as is illustrated in Fig. 2.

Further, as is apparent from Fig. 2, the controller 90 controls the driving force distributing means 10 and repeatedly increases and decreases the first ratio R1 at which the driving force of the engine 1 is distributed to the compressor 2, in such a manner that the phase of the first ratio R1 is opposite to the phase of the second ratio R2. In this case, the second ratio R2, at which the driving force of the engine 1 is distributed to the compressor 2, is repeatedly decreased and increased. Therefore, when cooling is highly required, an amount of electric energy generated by the electrical generator 3 is controlled to be relatively smaller than that generated when cooling is less required. On the other hand, when cooling is not demanded that much, an amount of electric energy generated by the electrical generator 3 is controlled to be relatively greater than that generated when cooling is highly required. As described above, operations of the compressor 2 and the electrical generator 3 are controlled in such a manner that the phase of the first ratio R1 can be opposite to the phase of the second ratio R2. The total ratio (=R1+R2) of the first and second ratios R1 and R2 thus can be confined to within the definite range W. Therefore, according to the embodiment of the present invention, the engine load factor can be effectively confined to a predetermined value or more, and to within the definite range W. Moreover, fuel consumption of the engine can be effectively reduced to the maximum possible extent. Still moreover, contributions can be made to reduce a degree of noise of the engine 1, and to improve durability of the engine 1.

### (2) At the time of heating

As described above, on the basis of at least one of thermal energy information S 1 of the water storage tank 7, air-conditioning load information S2 required to the air-conditioner 8, and required electric energy amount information S3 required to the electrical generator 3, the controller 90 determines the first ratio R1, at which the driving force of the engine 1 is distributed to the compressor 2, and the second ratio R2, at which the driving force of the engine 1 is distributed to the motor-generator 3. In this case, as is denoted by a characteristic line E illustrated in Fig. 3, a load factor of the engine 1 is basically controlled to be definite over a period of time. Even if the engine load factor alters due to variations in at least one of the air-conditioning load information S2 and the required electric energy amount information S3, the controller 90 controls activation of the engine 1 in such a manner that the engine load factor can be confined to within a definite range W in Fig. 3. According to the embodiment of the present invention, it is therefore possible to effectively reduce fuel consumption to the maximum possible extent. Moreover, it is possible to effectively reduce costs for fuel that is consumed for activating the engine 1.

When heating is highly required, such as when an outside temperature is low, the air conditioner 8 is addressed to be applied with heating load (air-conditioning load) relatively greater than the one which is needed when an outside temperature falls within an appropriate temperature range. During an early period of time Tb immediately after start-up of heating at a time t1, in order heat a space at a high speed, the controller 90 relatively controls the first ratio R1, at which the driving force of the engine 1 is distributed to the compressor 2, to be a high value, thereby enhancing heating performance of the air-conditioning 8. In this case, the second ratio R2, at which the driving force of the engine 1 is distributed to the electrical generator 3, is relatively controlled to be a low value, thereby curbing an amount of electrical energy generated by the electrical generator 3. Therefore, when heating is highly required, control performed by the controller 90 focuses on heating rather than electric energy generation in such a manner that heating can be effectively performed. In a matter of time after the early period of time Tb, heating is gradually less required while heating in the room is being progressed. In such circumstances, the controller 90 relatively controls the first ratio R1 to a ratio level being lower than that during the early period of time Tb, wherein heating performance of the air-conditioner 8 can be gradually reduced. In a matter of another time, heating is again highly required in response to decrease in a room temperature. The controller 90 then relatively raises the first ratio R1, wherein heating performance of the air-conditioner 8 can be increased.

As described above, according to the embodiment of the present invention, excluding the early period of time Tb immediately after start-up of heating the space at a time t1, during a stationary period of time Tm (Fig. 3), the first ratio R1 is thus controlled by the controller 90 to go up and down creating a sine curve as is illustrated in Fig. 3.

In the same as the time of cooling, as is apparent from Fig. 3, when heating is required, the controller 90 also controls the driving force distributing means 10 in such a manner that the phase of the first ratio R1 becomes opposite to the phase of the second ratio R2. That is, the controller 90 repeatedly and relatively raises and lowers both the first ratio R1, at which the driving force of the engine 1 is distributed to the compressor 2, and the second ratio R2, at which the driving force of the engine 1 is distributed to the electrical generator 3. Therefore, when heating is highly required, an amount of electric energy generated by the electrical generator 3 is controlled to be smaller than that generated when heating requirement is low. On the other hand, when heating is less required, an amount of electric energy generated by the electrical generator 3 is controlled to be greater than that generated when heating requirement is high. As described above, operations of the compressor 2 and the electrical generator 3 are controlled in such a manner that the phase of the first ratio R1 can be opposite to the phase of the second ratio R2. The total ratio (=R1+R2) of the first and second ratios R1 and R2 thus can be effectively confined to within the definite range. Therefore, according to the embodiment of the present invention, the engine load factor can be effectively confined to a predetermined value or more, and to within the definite range W. Moreover, fuel consumption of the engine can be effectively reduced to the maximum possible extent. Still moreover, contributions can be made to reduce a degree of noise of the engine 1, and to improve durability of the engine 1.

When heating requirement is confirmed, the floor heating appliance 72 can be used, together with the air conditioner 8, inter alia, for the purpose of warming a floor of the building 100 by use of hot water (i.e., an auxiliary heating means) accumulated in the water storage tank 7. As described above, water in the water storage tank 7can be heated up by recovering waste heat of the engine 1, thereby effectively reducing heating cost. As is illustrated with a characteristic line F in Fig. 3, because the effect of heating by means of the floor heating appliance 72 appears in an early period of time Tb immediately after starting-up heating, heating load (air-conditioning load) required to the air conditioner 8 can be relatively reduced depending upon a result of heating by the floor heating appliance 72. Therefore, compared to heating performance only by use of the air conditioner 8, not in combination with the floor heating appliance 72, the first ratio R1, at which the driving force of the engine 1 is distributed to the compressor 2 for operating the air conditioner 8, can be shifted in a direction to be reduced, i.e., in a direction of arrow Y1. In response to the reduction of the first ratio R1, the second ratio R2, at which the driving force of the engine 1 is distributed to the electrical generator 3, can be shifted in a direction to be increased, i.e., in a direction of arrow Y2, thereby enabling to increase an amount of electric energy generated by the electrical generator 3. In such circumstances, an excessive amount of electric energy, which is possibly generated by the electrical generator 3, can be stored in the storage battery 4. Alternatively, such an excessive amount of electric energy can be effectively consumed by increasing an amount of electric energy to be consumed by the electric power-consuming unit 110 of the building 100. Further, compared to a heating performance by use of the only air conditioner 8, not in combination with the floor heating appliance 72, according to the embodiment of the present invention, it is possible, while maintaining the first and second ratios R1 and R2, to reduce an engine load factor depending upon an effect of heating by the floor heating appliance 72, thereby effectively reducing cost for fuel of the engine 1. The effect of heating by the floor heating appliance 72 is denoted with Δ E in Fig. 3.

### (3) At the time of neither cooling nor heating

When cooling and heating requirements are not obtained, such as when an outside temperature falls within an optimum temperature range, the air conditioner 8 is not basically subjected to air-conditioning load. In such circumstances, almost entire driving force of the engine 1 can be distributed to the electrical generator 3 for generating electrical power, by increasing the second ratio R2 in combination with controlling the first ratio R1 down to 0%.

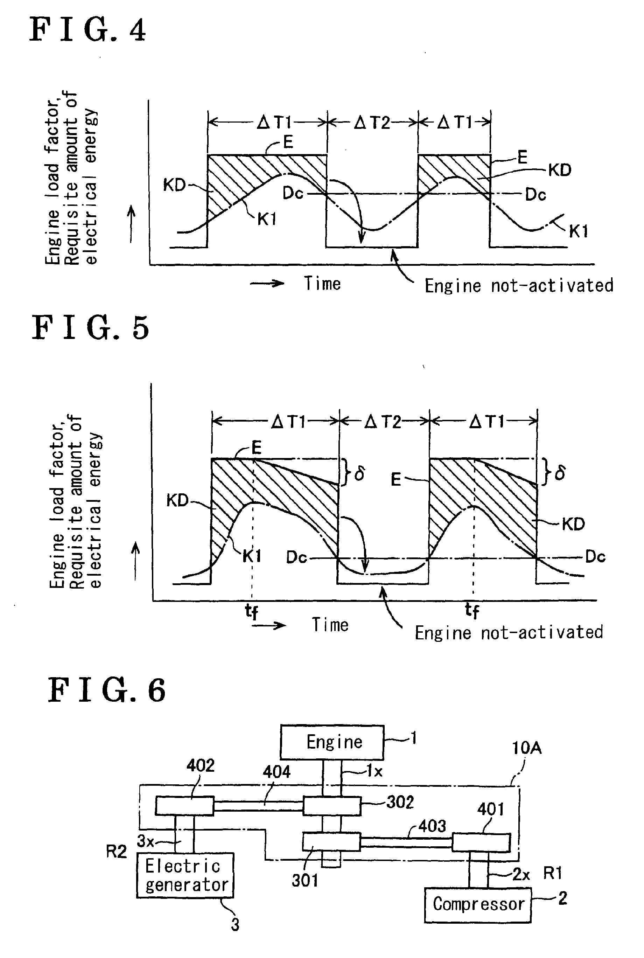

Characteristic lines K1 in Figs. 4 and 5 represent variations in a requisite amount of electric power to be generated (electric power consumption) of the building 100. As a specific example, in an average house, a requisite amount of electric power to be generated (electric power consumption) is relatively large in the morning and at night per day, while it is small during daytime. When both cooling and heating operations are not implemented, although the electrical generator 3 is activated, operation of the compressor 2 is ceased. Therefore, almost overall driving force from the engine 1 can be transmitted to the electrical generator 3 in such a manner of generating electric energy. As described above, there is hence a danger of electric energy of being excessively generated beyond required electric energy amount. In this case, in order to curve excessive generation of electric power, it may well be that the engine 1 is activated below the range in which engine fuel efficiency is good, by reducing the engine load factor of the engine. However, even if it inhibits an excessive amount of electric power generated by the electrical generator 3, the engine 1 is activated with the engine load factor that does not reach the range in which engine fuel efficiency is good, thereby on occasions deteriorating fuel efficiency of the engine 1.

In the light of the foregoing, when cooling and heating performances are not implemented, i.e., when operation of the compressor 2 is ceased, the following operation of this system according to the embodiment of the present invention can be preferably implemented. As is illustrated in Figs. 4 and 5, when a requisite amount of electric power to be generated (electric power consumption) is large, the engine 1 is activated for the purpose of driving the electrical generator 3. A period of time for activating the engine 1 is denoted with Δ T1. During the period of time Δ T1, electric energy KD is generated by the electrical generator 3, electric energy KD which is beyond a requisite amount of electric power to be generated (electric power consumption). In order to accumulate this excessive electric power KD in the storage battery 4, the controller 90 feeds a signal Sb to the storage battery 4. Meanwhile, while the requisite amount of electric power to be generated (electric power consumption) is below a threshold value Dc, activation of the engine 1 is ceased, and operation of the electrical generator 3 is then also ceased. Therefore, it is possible to reduce fuel consumption to the maximum possible extent. A stop time of the engine 1 is denoted with Δ T2.

As described above, while the engine 1 is being inactive, the electrical generator 3 is not operated and cannot generate electric energy. The controller 90 hence supplies electric energy accumulated in the storage battery 4 to the 110 of the building 100. As described above, when the compressor 2 is not being operated, air-conditioning load is not required, thereby enabling to intermittently activate and stop the engine 1. Therefore, the engine 1 can be prevented from being activated more than needs. Further, the engine 1 can be prevented from being activated with an engine load factor which may damage fuel efficiency, thereby effectively capable of reducing fuel cost of the engine 1. As is apparent from Fig. 5, it is preferable that, during the period of time Δ T1 at which the engine 1 is being activated, the engine load factor is reduced by an amount denoted with δ in Fig. 5 in response to drop in a requisite amount of electric power to be generated (electric power consumption). Therefore, the engine load factor can be reduced from, or about from, a time tf at which the requisite amount of electric power to be generated (electric power consumption) is reduced. However, in this case, it is preferable that the engine load factor is confined to within the definite range at which engine efficiency is good.

### (Driving force distributing means 10)

The driving force distributing means 10 transmits driving force of the engine 1 to both the compressor 2 and the electric generator 3. The driving force distributing means 10 further alters the first ratio R1, at which the driving force of the engine 1 is distributed to the compressor 2, and the second ratio R2, at which the driving force of the engine 1 is distributed to the electric generator 3. The following will be provided in order to explain some types of the driving force distributing means 10.

According to an example illustrated in Fig. 6, a driving force distributing means 10A is configured with a first rotator 301 and a second rotator 302 both mounted on a drive shaft 1x of the engine 1, a first driven rotator 401 mounted on a driven shaft 2x of the compressor 2, a second driven rotator 402 mounted on a driven shaft 3x of the electric generator 3, a first endless body 403 (e.g., a belt) for connecting the first driven rotator 401 to the first rotator 301, and a second endless body 404 (e.g., a belt) for connecting the second rotator 402 to the second rotator 302.

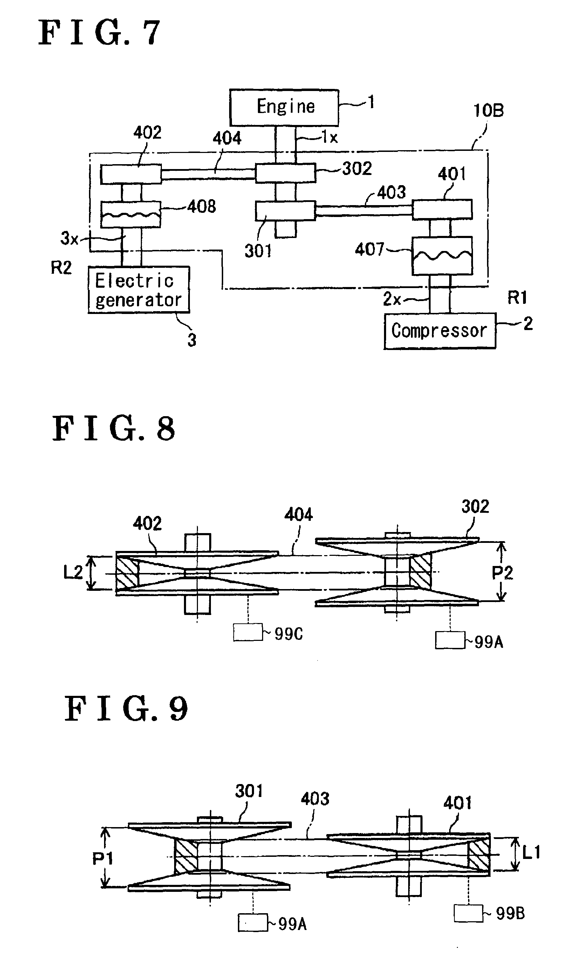

According to another example illustrated in Fig. 7, a driving force distributing means 10B is configured with the first rotator 301 and the second rotator 302 both mounted on the drive shaft 1x of the engine 1, the first driven rotator 401 mounted on the driven shaft 2x of the compressor 2, the second driven rotator 402 mounted on the driven shaft 3x of the electric generator 3, the first endless body 403 (e.g., a belt) for connecting the first driven rotator 401 to the first rotator 301, the second endless body 404 (e.g., a belt) for connecting the second rotator 402 to the second rotator 302, a first clutch 407 (i.e., a clutch means) for establishing and interrupting a transmitting path for transmitting driving force to, or from, the compressor 2, and a second clutch 408 (i.e., a clutch means) for establishing and interrupting a transmitting path for transmitting driving force to, or from, the driven shaft 3x of the electric generator 3. When a transmitting path, according to which driving force of the engine 1 is transmitted, is interrupted by the first clutch 407, the first ratio R1, at which the driving force of the engine 1 is distributed to the compressor 2, can be controlled to substantially zero %. In this case, almost overall driving force of the engine 1 is basically distributed to the electric generator 3.

Further, when a transmitting path, according to which driving force of the engine 1 is transmitted, is interrupted by the second clutch 408, the second ratio R2, at which the driving force of the engine 1 is distributed to the electric generator 3, can be controlled to substantially zero %. In this case, if loss in friction is not taken into account, almost overall driving force of the engine 1 can be basically distributed to the compressor 2.

Still further, as are illustrated in Figs. 8 and 9, both an axial width between pulleys (denoted with P1) of the first rotator 301 and an axial width between pulleys (denoted with P2) of the second rotator 302 are respectively altered by an actuator 99A. An axial width between pulleys (denoted with L1) of the first driven rotator 401 is altered by an actuator 99B. An axial width between pulleys (denoted with L2) of the second rotator 402 is altered by an actuator 99C. As described above, because the widths of the respective rotators are changed by the controller 90, the first ratio R1, at which driving force of the engine 1 can be distributed to the compressor 2, and the second ratio R2, at which driving force of the engine 1 can be distributed to the electric generator 3, can be changed continuously.

According to the above-described embodiment of the present invention, when the electric generator 3 generates electric energy excessively, such an excessive amount of electric energy are stored in the storage battery 4. Alternatively, such an excessive amount of electric energy can be fed to commercial electric wires together with being fed to the storage battery 4, or fed only to commercial electric wires in stead of being fed to the storage battery 4.

The principles, the preferred embodiment and mode of operation of the present invention have been described in the foregoing specification. However, the invention, which is intended to be protected, is not to be construed as limited to the particular embodiment disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents that fall within the spirit and scope of the present invention as defined in the claims, be embraced thereby.

## Claims

1. An air-conditioning and electric energy generating system including an engine (1) producing a driving force; an air conditioner having at least one of cooling and heating abilities; an air conditioner-driving device (2) for driving the air conditioner (8); and an electrical generator (3) for generating electrical energy **characterized in** further comprising:
a driving force distributing means (10) provided between the air conditioner-driving device (2) and the electrical generator (3) and for distributing the driving force from the engine to the air conditioner-driving device (2) and the electrical generator (3) at variable first and second ratios (R1 and R2), respectively.

2. An air-conditioning and electric energy generating system according to claim 1 **characterized in** still further comprising a driving force distribution ratio controlling means (90) for controlling the second ratio (R2) relatively lower and higher when the first ratio (R1) is relatively high and low, respectively.

3. An air-conditioning and electric energy generating system according to claim 1 **characterized in** still further comprising a driving force distribution ratio controlling means (90), while an engine load factor is being confined to within a definite range (W), for controlling the second ratio (R2) relatively lower and higher when the first ratio (R1) is relatively high and low, respectively.

4. An air-conditioning and electric energy generating system according to claim 2 or 3, wherein the driving force distribution ratio controlling means (90) controls the first ratio (R1) and the second ratio (R2) depending on at least one of thermal energy information (S1) on thermal energy accumulated in a water storage tank (7), air-conditioning load information (S2) required to the air conditioner (8), and required electric energy amount information (S3) on a requisite amount of electric power to be generated.

5. An air-conditioning and electric energy generating system according to claim 4, wherein the driving force distribution ratio controlling means (90) implements a first distribution control and a second distribution control, the first distribution control being served for decreasing the first ratio (R1) and increasing the second ratio (R2) when an air-conditioning load required to the air conditioner is relatively small, the second distribution control being served for increasing the first ratio and decreasing the second ratio when the air-conditioning load required to the air conditioner is relatively high.

6. An air-conditioning and electric energy generating system according to any preceding claim, further comprising:
an engine controlling means (90) capable of being connected to at least one of a storage battery (40) and a commercial power supply, the engine controlling means (90) being served for activating the engine (1) such that its load factor is set above a specific value corresponding to a requisite amount of electric power; and
an electrical energy controlling means (90) for providing a surplus electrical energy of the electric generator therefrom to at least one of the storage battery and the commercial electric power.

7. An air-conditioning and electric energy generating system according to one of claims 1-5, further comprising:
an engine controlling means (90) for activating the engine (1) such that its load factor is set above a specific value corresponding to a requisite amount of electric power to be generated, the engine controlling means causing the engine to stop so long as a requisite amount of electric power is less than a threshold value; and
an electrical energy controlling means (90) for providing a surplus electrical energy of the electric generator therefrom to at least one of the storage battery and the commercial electric power, an electrical energy controlling means being capable of supplying current to a power consuming unit from the at least one of the storage battery and the commercial electric power.

8. An air-conditioning and electric energy generating system according to any preceding claim, wherein the engine (1) is a gas engine which consumes combustible gas as an engine fuel, and the gas engine is a sole and common driving power source for the compressor (2) and the electric generator (3).

9. An air-conditioning and electric energy generating system according to any preceding claim, switching between cooling and heating operations of the air conditioner is performed manually.

10. An air-conditioning and electric energy generating system according to any preceding claim, wherein the engine (1) is a gas engine which consumes combustible gas as an engine fuel, and waste heat of the gas engine is recovered for being used for at least one predetermined application.

11. An air-conditioning and electric energy generating system according to claim 10, wherein the recovered waste heat is used for generating hot water.

12. An air-conditioning and electric energy generating system according to claim 11, wherein the hot water is used as an auxiliary heating means.

13. An air-conditioning and electric energy generating system according to any preceding claim, wherein the first ratio (R1) and the second ratio (R2) vary in stepless mode.

14. An air-conditioning and electric energy generating system according to any preceding claim, wherein the first ratio (R1) and the second ratio (R2) vary in stepwise mode.

15. An air-conditioning and electric energy generating system according to any preceding claim, wherein the driving force distributing means (10) includes:
a first rotator (301) with a pulley-width and a second rotator (302) with a pulley-width, which both are mounted on a drive shaft (1x) of the engine (1) for being rotated therewith;
a first driven rotator (401) with a pulley-width mounted on a driven shaft (2x) of the compressor (2) for being rotated therewith;
a second driven rotator (402) with a pulley-width mounted on a driven shaft of the electric generator for being rotated therewith;
a first endless body (403) interconnecting the first driven rotator (401) and the first rotator (301); and
a second endless body (404) interconnecting the second driven rotator (402) and the second rotator (302),
at least one of the pulley-width of the first rotator and the pulley width of the first driven rotator being variable.

16. An air-conditioning and electric energy generating system according to any preceding claim, wherein the driving force distributing means (10) includes:
a first rotator (301) with a pulley-width and a second rotator (302) with a pulley-width, which both are mounted on a drive shaft (1x) of the engine (1) for being rotated therewith;
a first driven rotator (401) with a pulley-width mounted on a driven shaft (2x) of the compressor (2) for being rotated therewith;
a second driven rotator (402) with a pulley-width mounted on a driven shaft of the electric generator for being rotated therewith;
a first endless body (403) interconnecting the second driven rotator (402) and the second rotator (302); and
a second endless body (404) interconnecting the second driven rotator and the second rotator,
at least one of the pulley-width of the second rotator and the pulley-width of the second driven rotator being variable.

17. An air-conditioning and electric energy generating system according to claim 15 or 16, further comprising a clutch means that makes at least one of the first rotator and the second rotator free from the rotation of the drive shaft of the engine (1).
